# EUROPÄISCHE PATENTANMELDUNG

(11) **EP 4 328 425 A1**
(43) Veröffentlichungstag der Anmeldung: **28.02.2024**
(21) Anmeldenummer: 22191791.7
(22) Anmeldetag: 23.08.2022
(51) Int. Cl.: F01K 3/12, F22B 1/00

(54) **WASSER-ZIRKULATIONS-ENERGIE-GENERATOR**

(71) Anmelder: Özkan, Edip, 60594 Frankfurt am Main (DE)
(72) Erfinder: Özkan, Edip, 60594 Frankfurt am Main (DE)

(57) **Zusammenfassung**

Seite 6: Bild3, Drahtmodel-Konstruktion Links-/Recht-Seitenansicht
Seite 7: Bild4, Drahtmodel-/Rendermodel-Konstruktion Vorder-Seitenansicht
Seite 8: Bild5, Rendermodel-Konstruktion Perspektive-Oben/Rechts
Seite 9: Bild6, R&I-Fließschema Querformat

## Beschreibung

Der WZEG ist ein Generator. Es generiert Elektrische und Wärme-Energie.

Die Energiequelle ist fokussiertes (Sonnen-) Licht. Das Licht wird vor dem Fokussieren mit Blenden versehen und auf ein Brennpunkt gerichtet. Das fokussierte Licht wird frequentiert freigegeben bis die ideale Temperatur am Brennpunt erreicht ist. Am Brennpunkt entsteht Hitze und Druck. Das Medium (Wasser) dehnt sich in eine Richtung, dieses wird durch Rückschlagventile nach dem Tesla-Prinzip realisiert. Es entsteht ein Wasserkreislauf. Die kinetische Energie des Wassers wird über Wasser-Turbinen abgeschöpft. Die kinetische Energie der Druckluft wird über Luft-Turbinen abgeschöpft. Bis auf die Druckluftöffnung (Sicherheit) ist es ein hermetischer Kreislauf. Konstuktions Bestandteile:
1 Kaltwasser-Tank
1 Warmwasser-Tank
2 Tesla-Ventile (Rückschlag-Ventile)
1 Fokussierungsvorrichtung mit Blenden und Taktung
1 Glaskugel (Hohl mit diagonalen Rohr-Öffnungen aus Panzerglas) / Brennpunktkörper
1 Licht-/Hitze-Schild hinter der Brennweite (Brennpunktkörper)
1 Wasser-Pendel-Leitung mit Barriere Warm-/Kalt-Wasser
1 Barriere (Warm-/Kalt-Wasser)
1 Luft-Pendel-Leitung mit Kondensat Barriere-Kammer
1 Barriere (Luft/Wasser)Kondensat-Abscheider
2 E-Generatoren mit Wechsel-/Frequenz-Umrichter
3 Wärme-Tauscher

Ablauf:
1.) Beide Warm-/Kalt-Wasserbehälter und Pendelleitungen sind bis zum Arbeits-Level gefüllt. Der Brennpunktkörper X0010 wird über eine Fokussierungs-Apparatur impulsweise bis zum Erreichen der Betriebstemperatur aufgeheizt.
2.) Das Wasser wird im Brennpunktkörper bis zur Verdampfung erhitzt. Durch die Tesla-Ventile wird das Wasser gezwungen sich im Warmwasserbehälter V0010 auszudehnen. Das heiße Wasser wird über eine 15° Düse am Ende des Rohres, als Strahl in die Wasser-Turbine E0010 in den Warmwasserbehälter weitergeleitet.
3.) Der entstandene Überdruck wird über eine Luft-Turbine E0011 in der Pendelleitung vom Warm- Wasserbehälter V0010 nach V0011 ausgeglichen. Das entstandene Kondensat wird ebenfalls in den Kaltwasserbehälter V0011 rückgeführt.
4.) Das verdrängte Volumen wird vom Kaltwasserbehälter nachgefüllt und erneut wird der Brennpunktkörper X0010 auf Betriebstemperatur gebracht. Das überschüssige Volumen wird nach Wärmeaustausch vom Warmwasserbehälter über eine Barriere in den Kaltwasserbehälter rückgeführt.
5.) Nach stetiger Abfuhr der Wärme durch Wärmetauscher, stellt sich eine max. Temperatur von 110°C im Wärmebehälter und 60°C im Kaltwasserbehälter ein. In Beiden Behältern herrscht Überdruck. Der bei der Expansion entstandene Überdruck wird bei der Kondensierung kompensiert.
6.) Nach Abstellen der Anlage stellt sich nach Abkühlung der Atmosphärendruck wieder ein.

Fokussierungsvorrichtung mit Blenden und Taktung:
Die Regelung der Temperatur am Brennpunktkörper mit Sonnenlicht wird mit Blenden die vor der Fokussierung bestückt sind geregelt. Die Blenden können sowohl elektro-mechanisch als als auch in Folien-Form elektrisch angesteuert werden.

Die Regelung der Temperatur am Brennpunktkörper mit künstlichem Licht wird durch die vorbestimmte Intensität der Lichtquelle selbst geregelt.

Am Hitzeschild hinter dem Brennpunktkörper befindet sich ein Bimetall, welches ein Einschalten oder das Betreiben im kritischen Zustand verhindert (Schutz).

Kritische Füllstände führen ebenfalls zum Abschalten der Anlage

Die internen Drücke und Temperaturen, bestimmen die erforderliche Lichtintensität bzw. Lichtdauer.

Verwendungszweck:
Groß-Kraftwerk mit 10 m³ bis 100 m³ Behältern.
Heim-Kraftwerk mit 0,01 m³ bis 1 m³ Behältern.
Nur Fernwärme: Erzeugte elektrische Energie für Pumpen der Fernwärme ins Netz verwenden.
Nur Heimwärme: Erzeugte elektrische Energie für Pumpen in das Haus-Wärme-Netz verwenden.

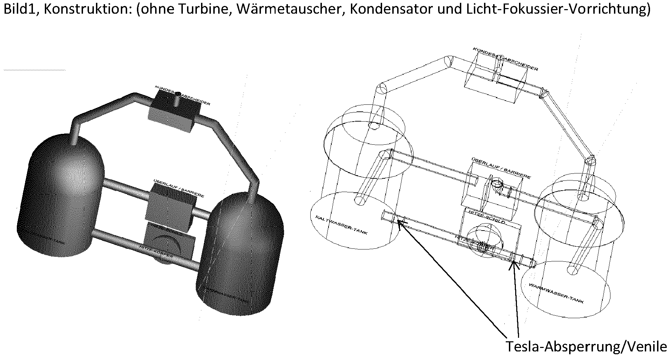

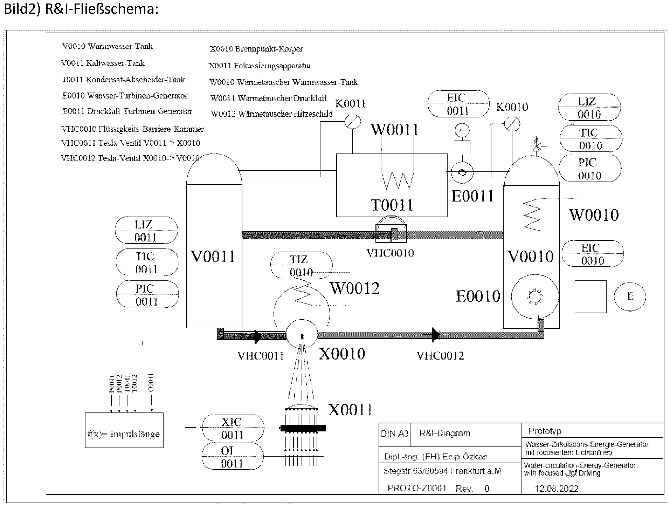

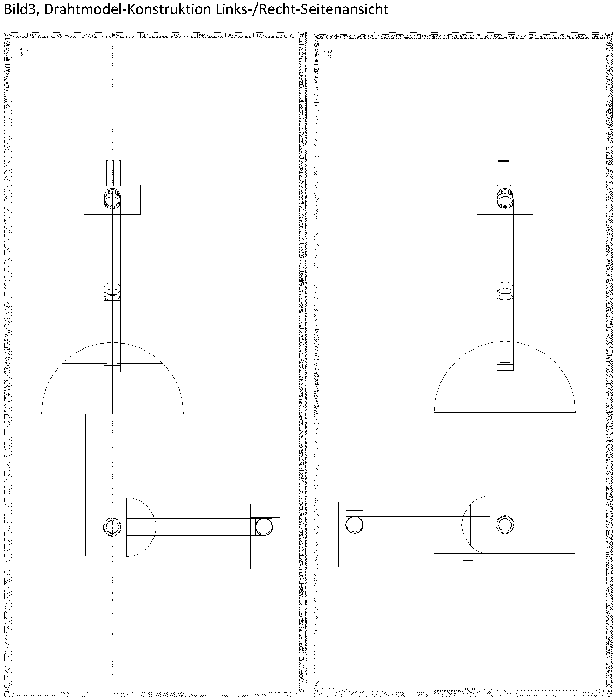

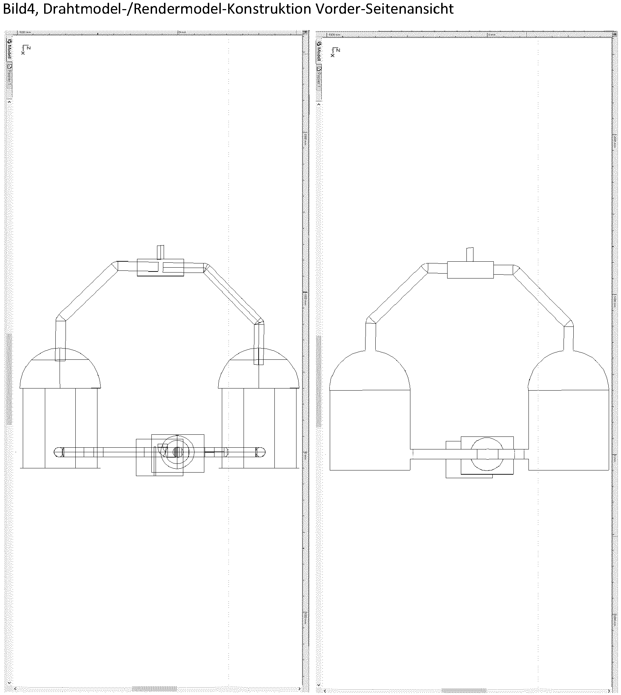

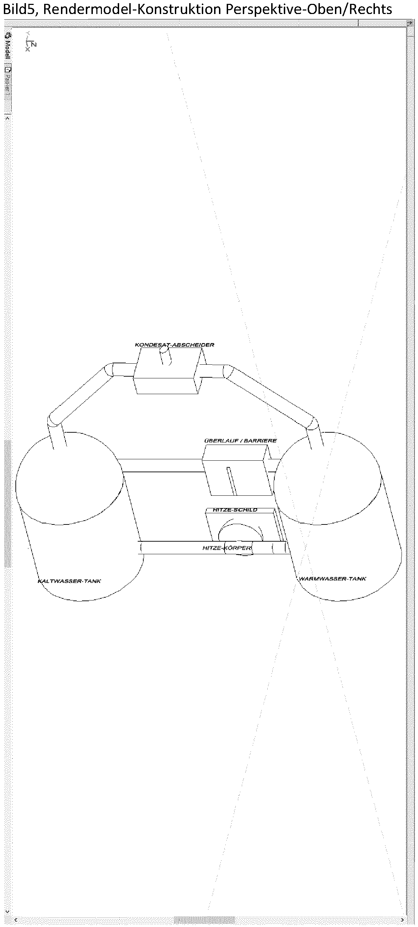

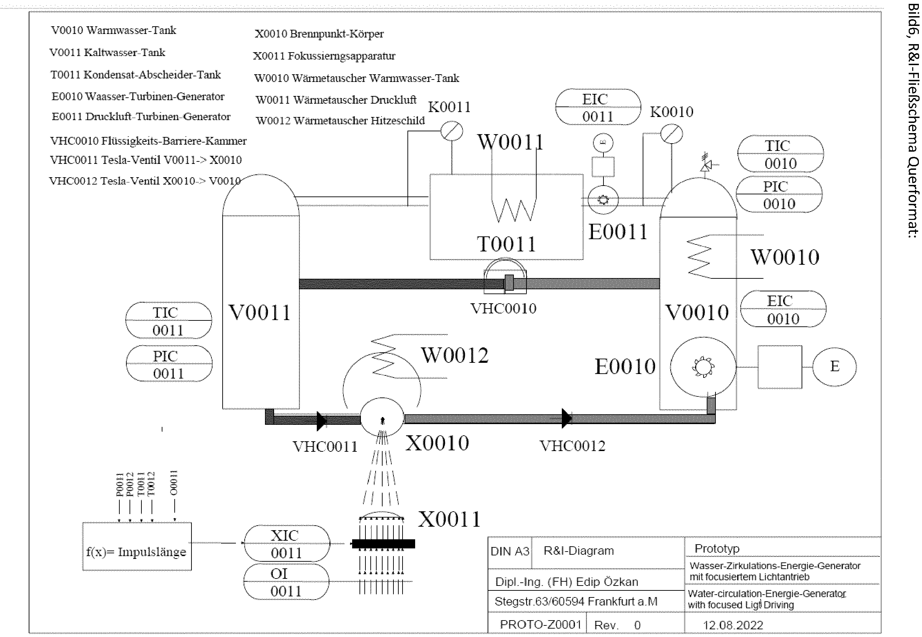

## Patentansprüche

1. Wie Verwendungszweck:
Groß-Kraftwerk mit 10 m³ bis 100 m³ Behältern.
Heim-Kraftwerk mit 0,01 m³ bis 1 m³ Behältern.
Nur Fernwärme: Erzeugte elektrische Energie für Pumpen der Fernwärme ins Netz verwenden.
Nur Heimwärme: Erzeugte elektrische Energie für Pumpen in das Haus-Wärme-Netz verwenden.
